# EUROPÄISCHE PATENTSCHRIFT

(11) **EP 4 214 809 B1**
(45) Veröffentlichungstag und Bekanntmachung des Hinweises auf die Patenterteilung: **10.09.2025**
(21) Anmeldenummer: 21745763.9
(22) Anmeldetag: 15.07.2021
(51) Int. Cl.: H01T 13/54, H01T 13/32, H01T 13/34, H01T 13/46

(54) **VORKAMMER-ZÜNDKERZE MIT MASSEELEKTRODE AN DER GEHÄUSEINNENSEITE**
PRE-CHAMBER SPARK PLUG HAVING A GROUND ELECTRODE ON THE INTERIOR OF THE HOUSING
BOUGIE D'ALLUMAGE DE PRÉ-CHAMBRE COMPORTANT UNE ÉLECTRODE DE MASSE À L'INTÉRIEUR DU BOÎTIER

(30) Priorität: 16.09.2020 DE 102020211583
(43) Veröffentlichungstag der Anmeldung: 26.07.2023
(73) Patentinhaber: Robert Bosch GmbH, 70442 Stuttgart (DE)
(72) Erfinder: KASKE, Stephan, 75447 Sternenfels Diefenbach (DE); BLANKMEISTER, Matthias, 42579 Heiligenhaus (DE)
(86) Internationale Anmeldenummer: PCT/EP2021/069720
(87) Internationale Veröffentlichungsnummer: WO 2022/058066

(56) Entgegenhaltungen:
- DE-A1- 10 144 976
- DE-A1- 102011 053 530
- DE-A1- 102018 209 970
- DE-B3- 102015 204 814

## Beschreibung

### Stand der Technik

Aus der DE102017221517 A1, der DE102015204814 B3 und der DE102011053530 A1 sind bereits Vorkammer-Zündkerzen gemäß dem Oberbegriff des Anspruchs 1 bekannt. Derartige Vorkammer-Zündkerzen werden zur besseren Entflammung magerer Kraftstoff/Luftgemische verwendet.

Bei der bekannten Zündkerze ist die Masseelektrode in eine Durchgangsbohrung der Gehäusewand eingesteckt und befestigt.

### Vorteil der Erfindung/ Offenbarung der Erfindung

Die Erfindung geht von der Beobachtung der Erfinder aus, dass die Platzierung der Masseelektrode in der Durchgangsbohrung der Gehäusewand mit Schwankungen der Platzierung der Masseelektrode einhergehen, die sich auch auf die Breite des Zündspaltes auswirken und damit sehr relevant für die funktionalen Eigenschaften der Zündkerze sind.

Die erfindungsgemäße Vorkammer-Zündkerze überwindet diese Ungenauigkeit, indem ein am Gehäuse verkörperter Anschlag in die nach außen weisende radiale Richtung geschaffen wird, auf dessen Basis eine sehr präzise Platzierung der Masseelektrode in dem Gehäuse erfolgen kann.

Bei diesem Anschlag kann es sich um den Boden einer zur Innenseite des Gehäuses hin offenen Sacklochbohrung handeln, an dem die Masseelektrode anliegt. Alternativ kann es sich um die radiale Außenseite einer in Längsrichtung an der Innenseite in das Gehäuse eingebrachten Stufe handeln, auf der die Masseelektrode platziert ist. Die Stufe weist insbesondere zum Brennraum hin. Die Stufe kann im Rahmen einer in Längsrichtung gerade verlaufenden Ausnehmung oder Vertiefung ausgebildet sein, wobei die Stufe den Grund der Ausnehmung bzw. Vertiefung darstellt. Die Ausnehmung oder Vertiefung kann beispielsweise mit einem Fräser auf der Innenseite des Gehäuses eingebracht sein.

Die Masseelektrode ist in der Sacklochbohrung oder auf der Stufe verschweißt, insbesondere mit einem Laserstrahl verschweißt. Die Verschweißung erfolgt dabei von außen nach innen durch das Gehäuse hindurch, vorzugsweise durch einen von außen auf das Gehäuse gerichteten Laserstrahl.

Vorzugsweise ist vorgesehen, dass die Tiefe der Sacklochbohrung oder die radiale Erstreckung der Stufe etwa die halbe Wandstärke des Gehäuses im Übrigen, also insbesondere neben der Sacklochbohrung bzw. neben der Stufe, ausmacht.

### Zeichnung

Figur 1 zeigt ein Beispiel für eine erfindungsgemäße Vorkammer-Zündkerze gemäß einem ersten Ausführungsbeispiel.
Figur 2 zeigt ein Beispiel für eine erfindungsgemäße Vorkammer-Zündkerze gemäß einem zweiten Ausführungsbeispiel.

### Beschreibung des Ausführungsbeispiels

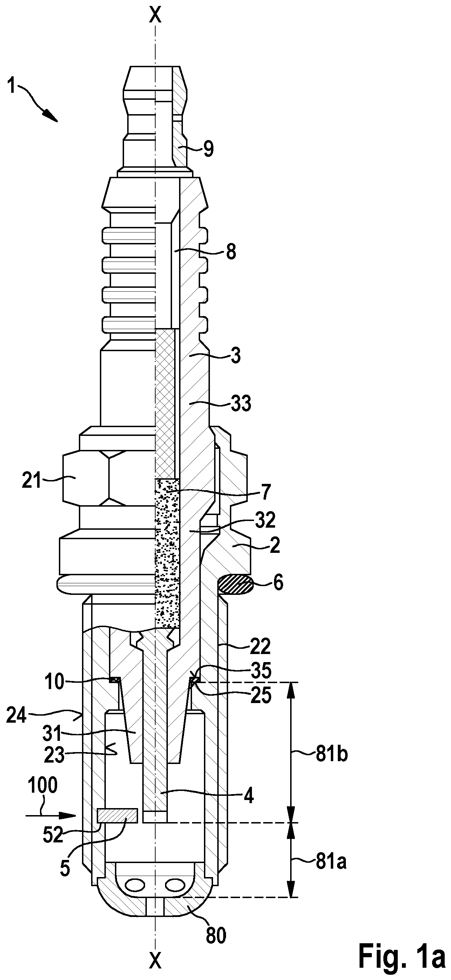

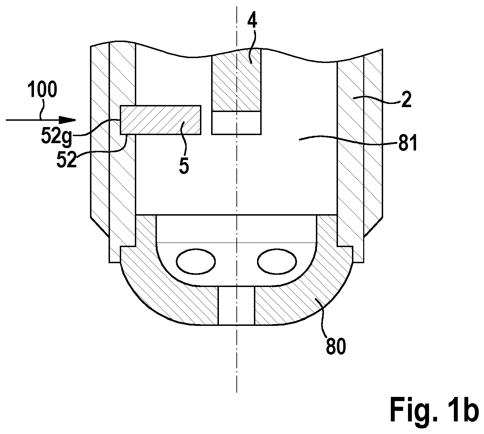

Figur 1 zeigt in a) eine teilweise geschnittene Ansicht einer Zündkerze 1 und in b) eine vergrößerte Teilansicht aus a). Die Zündkerze 1 umfasst ein Gehäuse 2. In das Gehäuse 2 ist ein Isolator 3 eingesetzt. Das Gehäuse 2 und der Isolator 3 weisen jeweils entlang ihrer Längsachse eine Bohrung auf. Das Gehäuse 2 hat eine Außenseite 24 und eine Innenseite 23. Die Längsachse des Gehäuses 2, die Längsachse X des Isolators 3 und die Längsachse der Zündkerze 1 fallen zusammen. In den Isolator 3 ist eine Mittelelektrode 4 eingesetzt. Des Weiteren erstreckt sich in den Isolator 3 eine elektrische Kontaktierung, über diese wird die Zündkerze 1 mit einer Spannungsquelle elektrisch kontaktiert. Die elektrische Kontaktierung bildet das Brennraum-abgewandte Ende der Zündkerze 1. Die elektrische Kontaktierung kann aus einem Anschlussbolzen 8 und einer Anschlussmutter 9 ausgebildet sein.

Der Isolator 3 wird typischerweise in drei Bereich unterteilt: Isolatorfuß 31, Isolatorkörper 32 und Isolatorkopf 33. Die drei Bereiche unterscheiden sich beispielsweise durch unterschiedliche Durchmesser. Der Isolatorfuß 31 ist das Brennraum-zugewandte Ende des Isolators 3. Innerhalb des Isolatorfußes 31 ist die Mittelelektrode 4 angeordnet. Der Isolatorfuß 31 ist in der Regel vollständig innerhalb des Gehäuses 2 angeordnet. In der Regel hat der Isolatorfuß 31 den kleinsten Außendurchmesser am Isolator 3.

Angrenzend an den Isolatorfuß 31 ist der Isolatorkörper 32 angeordnet, der in der Regel vollständig vom Gehäuse 2 umfasst ist. Der Isolatorkörper 32 hat einen größeren Außendurchmesser als der Isolatorfuß 31. Der Übergang zwischen Isolatorfuß 31 und Isolatorkörper 32 ist als Schulter oder Kehle ausgebildet. Dieser Übergang wird auch als Fußkehle oder Isolatorsitz 35 bezeichnet.

Der Isolatorkopf 33 grenzt am Brennraum-abgewandten Ende des Isolatorkörpers 32 an diesem an und bildet das Brennraum-abgewandte Ende des Isolators 3. Der Isolatorkopf 33 ragt aus dem Gehäuse 2 heraus. Der Außendurchmesser des Isolatorkopfs 33 liegt zwischen den Außendurchmessern von Isolatorfuß 31 und Isolatorkörper 32, wobei die Bereiche typischerweise über ihre Länge keinen konstanten Außendurchmesser haben, sondern der Außendurchmesser variieren kann.

Das Gehäuse 2 weist an seiner Innenseite einen Sitz 25 auf. Der Isolator liegt mit seiner Schulter bzw. Isolatorsitz 35 auf dem Gehäuse-Sitz 25 auf. Zwischen dem Isolatorsitz 35 und dem Gehäuse-Sitz 25 ist eine Innendichtung 10 angeordnet.

Zwischen der Mittelelektrode 4 und dem Anschlussbolzen 8 befindet sich im Isolator 3 ein Widerstandselement 7, auch Panat genannt. Das Widerstandselement 7 verbindet die Mittelelektrode 4 elektrisch leitend mit dem Anschlussbolzen 8. Das Widerstandselement 7 ist beispielsweise als Schichtsystem aus einem ersten Kontaktpanat, einem Widerstandspanat und einem zweiten Kontaktpanat aufgebaut. Die Schichten des Widerstandselements unterscheiden sich durch ihre Materialzusammensetzung und dem daraus resultierenden elektrischen Widerstand. Das erste Kontaktpanat und das zweite Kontaktpanat können einen unterschiedlichen oder einen gleichen elektrischen Widerstand aufweisen.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Zündkerze 1 in eine Brennkraftmaschine. Zwischen dem Gewinde 22 und dem Mehrkant 21 ist ein äußeres Dichtelement 6 angeordnet. Das äußere Dichtelement 6 ist in diesem Ausführungsbeispiel als Faltdichtung ausgestaltet.

Am Gehäuse 2 ist auf dessen brennraumseitiger Stirnfläche eine Kappe 80 angeordnet. Das Gehäuse 2 und die Kappe 80 bilden zusammen eine Vorkammer 81. Die Vorkammer 81 erstreckt sich von der Kappe 80 bis ins Gehäuse 2 hinein und innerhalb des Gehäuses 2 bis zum Gehäuse-Sitz 25, an dem der Isolator 3 mit seiner Schulter 35 aufliegt. Der Zwischenraum zwischen Gehäuse 2 und Isolator 3 ist an dieser Stelle mittels einer Innendichtung 10 gasdicht abgedichtet. Die Vorkammer 81 lässt sich in eine vordere Vorkammer 81a und eine hintere Vorkammer 81b unterteilen.

An der Innenseite 23 des Gehäuses 2 ist die Masseelektrode 5 in einer Sacklochbohrung 52 angeordnet, sodass die Masseelektrode 5 radial vom Grund 52g der Sacklochbohrung 52 ausgehend in die Vorkammer 81 hineinragt. Die Masseelektrode 5 und die Mittelelektrode 4 bilden zusammen einen Zündspalt in der Vorkammer 81 aus. Die Tiefe der Sacklochbohrung 52 ist im Beispiel etwa die halbe Wandstärke des Gehäuses 2 neben der Sacklochbohrung 52.

Die Masseelektrode 5 ist in der Sacklochbohrung 52 eingeschweißt, von außen, insbesondere mit einem von außen auf das Gehäuse 2 gerichteten Laserstrahl, dessen Lage und Ausbreitungsrichtung in der Figur 1b durch einen Pfeil 100 kenntlich gemacht ist.

Die Sacklochbohrung 52 ist in der Gehäusewand ist der axialen Höhe des Gewindes 22 ausgebildet. Dabei kann die Sacklochbohrung 52 für die Masseelektrode 5 und damit auch die Masseelektrode 5 auf jeder beliebigen Höhe im Bereich des Gewindes 22 angeordnet sein. Je nach der Position der Masseelektrode 5 im Bereich des Gewindes 22 ragt entsprechend die Mittelelektrode 4 und mit ihr auch der Isolatorfuß 31 mehr oder weniger weit in die Vorkammer 81 hinein. Je nach gewünschtem Verwendungszweck der Vorkammer-Zündkerze kann die Position der Bohrung im Bereich des Gewindes 22 und der Masseelektrode 5 auf der Innenseite 23 des Gehäuses 2 gewählt werden.

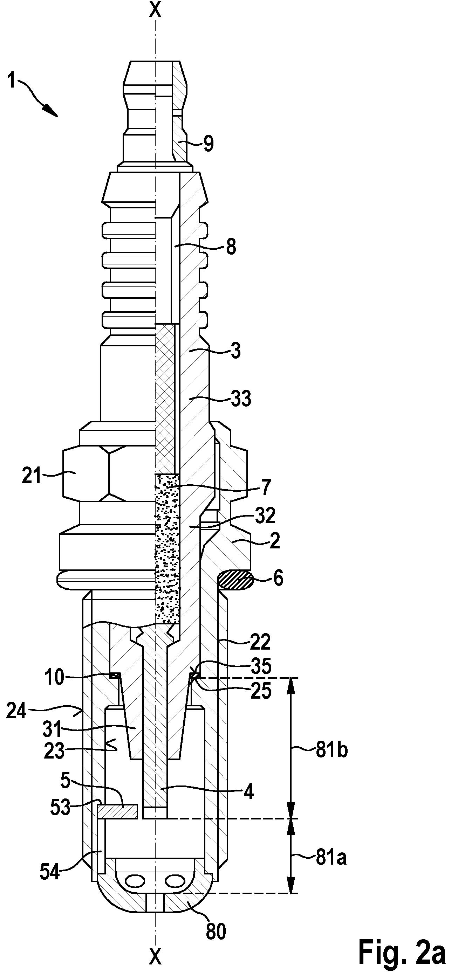

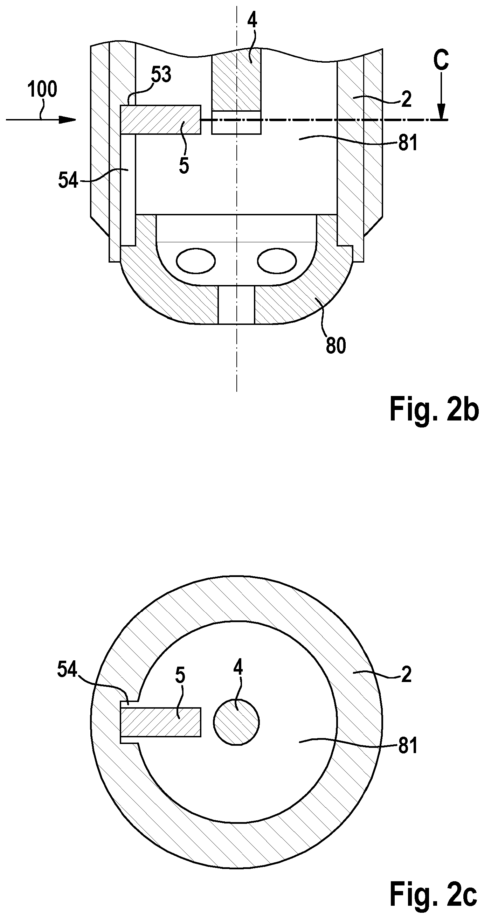

Figur 2 zeigt eine alternative Ausführungsform. Dabei ist in a) eine teilweise geschnittene Ansicht einer Zündkerze 1 und in b) eine vergrößerte Teilansicht aus a) zu sehen. In c) ist die Schnittebene c) aus b) zu sehen.

Die alternative Ausführungsform weist anstelle der Sacklochbohrung eine in Längsrichtung weisende Stufe 53 an der Innenseite 23 des Gehäuses 2 in der Gehäusewand auf. Auf der Stufe 53 liegt die Masseelektrode 5 auf, radial ausgehend von der Gehäusewand. Die Masseelektrode 5 ragt wiederum in die Vorkammer 81 hinein, sodass die Masseelektrode 5 und die Mittelelektrode 4 zusammen einen Zündspalt in der Vorkammer 81 ausbilden.

Die Stufe 53 ist durch eine in Längsrichtung, in der Figur 2a von unten nach oben gerade verlaufende Ausnehmung 54 ausgebildet, wobei die Stufe 53 den Grund der Ausnehmung 54 darstellt. Die Ausnehmung 54 kann beispielsweise mit einem Fräser auf der Innenseite des Gehäuses 2 in die Gehäusewand in Längsrichtung eingebracht sein.

Die radiale Erstreckung der Ausnehmung 54, und damit die radiale Erstreckung der Stufe 53, sind etwa die halbe Wandstärke des Gehäuses 2 neben der Ausnehmung 53.

In Umfangsrichtung ist die Erstreckung der Ausnehmung 54 im Beispiel entweder etwas größer als der Durchmesser der Masseelektrode 52, sodass die Masseelektrode in die Ausnehmung 54 ohne weiteres eingebracht werden kann.

Alternativ kann die Erstreckung der Ausnehmung 54 in Umfangsrichtung auch geringfügig kleiner als der Durchmesser der Masseelektrode 52 sein. In diesem Fall kann die Masseelektrode 52 in die Ausnehmung 54 eingepresst werden.

In diesem Beispiel ist die Masseelektrode 52 auf der Stufe 53 und an der Innenwand des Gehäuses 2 angeschweißt, beispielsweise von außen, insbesondere mit einem von außen auf das Gehäuse gerichteten Laserstrahl, dessen Lage und Ausbreitungsrichtung in der Figur2b durch einen Pfeil 100 kenntlich gemacht ist.

Alle Ausführungsformen sind nicht darauf eingeschränkt, dass nur eine einzige Masseelektrode 5 vorgesehen ist. Stattdessen können auch n Masseelektroden 5 vorgesehen sein, die beispielsweise wie in den Beispielen oben erläutert platziert sind. n kann bevorzugt 2, 3 oder 4 sein. Alternativ kann n eine noch größere ganze Zahl sein. Die Masseelektroden 5 können beispielsweise zueinander auf gleicher Höhe in Längsrichtung platziert sein, beispielsweise unter Winkeln in Umfangsrichtung von ±360°/n zu den jeweils benachbarten Masseelektroden.

## Patentansprüche

1. Vorkammer-Zündkerze (1), aufweisend
• ein Gehäuse (2) mit einer Bohrung entlang seiner Längsachse, wodurch das Gehäuse (2) eine Außenseite (24) und eine Innenseite (23) hat,
• eine Kappe (80), die am brennraumseitigen Ende des Gehäuses (2) angeordnet ist, und die zusammen mit dem Gehäuse (2) eine Vorkammer (81) ausbildet,
• ein innerhalb des Gehäuses (2) angeordneter Isolator (3)
• eine innerhalb des Isolators (3) angeordnete Mittelelektrode (4) und
• eine Masseelektrode (5), wobei die Masseelektrode (5) und die Mittelelektrode (4) so angeordnet sind, dass die beiden Elektroden einen Zündspalt ausbilden,
wobei das Gehäuse (2) eine zur Innenseite (23) hin offene Sacklochbohrung (52) aufweist, in der die Masseelektrode (5) platziert ist;
oder wobei das Gehäuse (2) an der Innenseite (23) eine in Längsrichtung weisende Stufe (53) aufweist, auf der die Masseelektrode (5) platziert ist,
wobei die Masseelektrode (5) in der Sacklochbohrung (52) oder auf der Stufe (53) verschweißt ist, **dadurch gekennzeichnet, dass** die Verschweißung von außen nach innen durch das Gehäuse (2) hindurch verläuft.

2. Zündkerze (1) nach Anspruch 1, **dadurch gekennzeichnet, dass** die Tiefe der Sacklochbohrung (52) oder die radiale Erstreckung der Stufe (53) etwa die halbe Wandstärke des Gehäuses (2) im Übrigen ausmacht.

3. Zündkerze (1) nach einem der Ansprüche 1 bis 2, **dadurch gekennzeichnet, dass** die von außen nach innen durch das Gehäuse (2) hindurch verlaufende Verschweißung durch einen von außen auf das Gehäuse (2) gerichteten Laserstrahl (100) eingebracht ist.

4. Zündkerze (1) nach einem der Ansprüche 1 bis 3, **dadurch gekennzeichnet, dass** mehrere Masseelektroden (5) vorgesehen sind.

5. Zündkerze (1) nach Anspruch 4, **dadurch gekennzeichnet, dass** die mehreren Masseelektroden (5) an der Innenseite des Gehäuses in einem Sackloch oder auf einer Stufe platziert sind.

6. Zündkerze (1) nach Anspruch 4 oder 5, **dadurch gekennzeichnet, dass** die mehreren Masseelektroden (5) n Masseelektroden sind, die zueinander auf gleicher Höhe in Längsrichtung platziert sind, unter Winkeln in Umfangsrichtung von ±360°/n zu den jeweils benachbarten Masseelektroden (5).

## Claims

1. Pre-chamber spark plug (1), having
• a housing (2) with a bore along its longitudinal axis, as a result of which the housing (2) has an outer side (24) and an inner side (23),
• a cap (80) which is arranged at the combustion chamber-side end of the housing (2) and which, together with the housing (2), forms a pre-chamber (81),
• an insulator (3) arranged within the housing (2),
• a centre electrode (4) arranged within the insulator (3) and
• an earth electrode (5), wherein the earth electrode (5) and the centre electrode (4) are arranged such that the two electrodes form an ignition gap,
wherein
the housing (2) has a blind bore (52) which is open towards the inner side (23) and in which the earth electrode (5) is placed;
or wherein the housing (2) has, on the inner side (23), a step (53) which is directed in the longitudinal direction and on which the earth electrode (5) is placed,
wherein the earth electrode (5) is welded in the blind bore (52) or on the step (53), **characterized in that**
the weld runs from the outside to the inside through the housing (2).

2. Spark plug (1) according to Claim 1, **characterized in that** the depth of the blind bore (52) or the radial extent of the step (53) otherwise makes up approximately half the wall thickness of the housing (2).

3. Spark plug (1) according to either of Claims 1 and 2, **characterized in that** the weld running through the housing (2) from the outside to the inside is introduced by a laser beam (100) directed onto the housing (2) from the outside.

4. Spark plug (1) according to any of Claims 1 to 3, **characterized in that** a plurality of earth electrodes (5) are provided.

5. Spark plug (1) according to Claim 4, **characterized in that** the plurality of earth electrodes (5) are placed on the inner side of the housing in a blind hole or on a step.

6. Spark plug (1) according to Claim 4 or 5, **characterized in that** the plurality of earth electrodes (5) are n earth electrodes which are placed at the same height in relation to each other in the longitudinal direction, at angles in the circumferential direction of ±360°/n with respect to the respectively adjacent earth electrodes (5).

## Revendications

1. Bougie d'allumage (1) de pré-chambre, comportant
• un boîtier (2) avec un alésage le long de son axe longitudinal, le boîtier (2) ayant ainsi un côté extérieur (24) et un côté intérieur (23),
• un capuchon (80), qui est disposé sur l'extrémité du boîtier (2) du côté de la chambre de combustion et qui réalise conjointement avec le boîtier (2) une pré-chambre (81),
• un isolateur (3) disposé à l'intérieur du boîtier (2),
• une électrode centrale (4) disposée à l'intérieur de l'isolateur (3), et
• une électrode de masse (5), l'électrode de masse (5) et l'électrode centrale (4) étant disposées de telle sorte que les deux électrodes réalisent un entrefer d'allumage,
le
boîtier (2) comportant un alésage borgne (52) ouvert en direction du côté intérieur (23), dans lequel est placée l'électrode de masse (5),
ou le boîtier (2) comportant, sur le côté intérieur (23), un palier (53) pointant dans la direction longitudinale, sur lequel est placée l'électrode de masse (5),
l'électrode de masse (5) étant soudée dans l'alésage borgne (52) ou sur le palier (53), **caractérisée en ce que**
le soudage s'étend de l'extérieur vers l'intérieur à travers le boîtier (2).

2. Bougie d'allumage (1) selon la revendication 1, **caractérisée en ce que** la profondeur de l'alésage borgne (52) ou l'extension radiale du palier (53) représente par ailleurs environ la moitié de l'épaisseur de paroi du boîtier (2).

3. Bougie d'allumage (1) selon l'une des revendications 1 à 2, **caractérisée en ce que** le soudage s'étendant de l'extérieur vers l'intérieur à travers le boîtier (2) est pratiqué par un rayon laser (100) dirigé depuis l'extérieur sur le boîtier (2).

4. Bougie d'allumage (1) selon l'une des revendications 1 à 3, **caractérisée en ce que** sont prévues plusieurs électrodes de masse (5).

5. Bougie d'allumage (1) selon la revendication 4, **caractérisée en ce que** les plusieurs électrodes de masse (5) sont placées dans un trou borgne ou sur un palier sur le côté intérieur du boîtier.

6. Bougie d'allumage (1) selon la revendication 4 ou 5, **caractérisée en ce que** les plusieurs électrodes de masse (5) sont n électrodes de masse, qui sont placées dans la direction longitudinale à une hauteur identique les unes par rapport aux autres, selon des angles dans la direction périphérique de +360°/n par rapport aux électrodes de masse (5) respectivement adjacentes.
